# EUROPÄISCHE PATENTANMELDUNG

(11) **EP 0 521 173 A1**
(43) Veröffentlichungstag der Anmeldung: **07.01.1993**
(21) Anmeldenummer: 91110111.1
(22) Anmeldetag: 20.06.1991
(51) Int. Cl.: G06K 13/04, G06K 13/067

(54) **Vorrichtung zum Lesen und ggf. Beschreiben von Magnetkarten**

(71) Anmelder: SCHEIDT & BACHMANN GMBH, D-41238 Mönchengladbach (DE)
(72) Erfinder: Miller, Gert, Dipl.-Ing., W-4050 Mönchengladbach 1 (DE); Höffges, Peter, Dipl.-Ing., W-4050 Mönchengladbach 5 (DE)
(74) Vertreter: Stenger, Watzke & Ring Patentanwälte

(57) **Zusammenfassung**

Die Erfindung betrifft eine Vorrichtung zum Lesen und ggf. Beschreiben von Magnetkarten mit einem Magnetkartenleser (1), dem die Magnetkarten an der Frontseite zugeführt und entnommen werden. Um Magnetkarten mit beliebiger Ausrichtung bei ihrer Eingabe in den Magnetkartenleser (1) verarbeiten zu können, ist an die Rückseite des Magnetkartenlesers (1) eine Dreh-Wende-Vorrichtung (4) angeschlossen, die einen Kartenschacht (7) umfaßt, der in einer Wendeeinheit (5) angeordnet ist, die um eine waagerechte Achse (5a) mittels eines Wendeantriebes um 180° verdrehbar ist und ihrerseits an einer Dreheinheit (6) gelagert ist, die um eine senkrechte Achse (6a) mittels eines Drehantriebes um 180° verdrehbar ist

## Beschreibung

Die Erfindung betrifft eine Vorrichtung zum Lesen und ggf. Beschreiben von Magnetkarten mit einem Magnetkartenleser und ggf. -schreiber, dem die Magnetkarten an der Frontseite zugeführt und entnommen werden.

Derartige Magnetkartenleser sind bekannt. Die zu lesenden und ggf. zu beschreibenden Magnetkarten müssen der Frontseite des Magnetkartenlesers in einer vorgegebenen Ausrichtung zugeführt werden. Sofern die Magnetkarte dem Magnetkartenleser mit der Unterseite nach oben weisend oder mit dem Ende als erstes zugeführt wird, stellt eine im Magnetkartenleser vorhandene Sensorik diese falsche Lage der Magnetkarte fest und bewirkt, daß die Magnetkarte mit dem Hinweis an den Benutzer zurückgegeben wird, er möge die Magnetkarte in der vorgeschriebenen Lage erneut dem Magnetkartenleser zuführen. Da derartige Magnetkartenleser eine immer stärkere Verbreitung finden und auch von weniger geübten Benutzern bedient werden müssen, führt eine derartige Rückgabe der falsch zugeführten Magnetkarte häufig zu einer Verwirrung der Benutzer.

Der Erfindung liegt die **Aufgabe** zugrunde, eine Vorrichtung der eingangs beschriebenen Art derart weiterzubilden, daß ihr Magnetkarten mit beliebiger Ausrichtung zugeführt werden können.

Die **Lösung** dieser Aufgabenstellung durch die Erfindung ist dadurch gekennzeichnet, daß an die Rückseite des Magnetkartenlesers eine Dreh-Wende-Vorrichtung angeschlossen ist, die einen Kartenschacht umfaßt, der in einer Wendeeinheit angeordnet ist, die um eine waagerechte Achse mittels eines Wendeantriebes um 180° verdrehbar ist und ihrerseits an einer Dreheinheit gelagert ist, die um eine senkrechte Achse mittels eines Drehantriebes um 180° verdrehbar ist.

Durch die Anordnung und Ausbildung der erfindungsgemäßen Dreh-Wende-Vorrichtung können die zu lesenden und ggf. zu beschreibenden Magnetkarten dem Magnetkartenleser in beliebiger Weise zugeführt werden. Auch wenn die Magnetkarte hinsichtlich der Lese- und Schreibköpfe des Magnetkartenlesers falsch zugeführt wird, beispielsweise wenn Ober- und Unterseite der Karte oder Anfang und Ende derselben vertauscht sind, erfolgt eine ordnungsgemäße Verarbeitung, weil die falsche Lage von der Sensorik im Magnetkartenleser erkannt wird. Die Magnetkarte wird nicht zurückgegeben, sondern der Dreh-Wende-Vorrichtung zugeführt, durch sie sie gedreht und/oder gewendet und anschließend dem Magnetkartenleser zurückgegeben wird. Es entfällt somit eine den Benutzer verwirrende Rückgabe, wobei es gleichgültig ist, ob es sich um einen einfachen Magnetkartenleser oder um ein Gerät handelt, welches die Magnetkarten nicht nur liest, sondern auch beschreibt.

Wenn gemäß einem weiteren Merkmal der Erfindung der Dreh-Wende-Vorrichtung mindestens ein Sammelbehälter für einzuziehende Karten und/oder ein Kartenmagazin für auszugebende Karten zugeordnet wird, kann die erfindungsgemäße Dreh-Wende-Vorrichtung nicht nur für eine richtige Positionierung der einem Magnetkartenleser zugeführten Magnetkarten verwendet werden, sondern auch als Bindeglied zu beliebig vielen Sammelbehältern und Kartenmagazinen. Hierdurch ergibt sich der Vorteil, daß beispielsweise für die Ausgabe unterschiedlicher Wertkarten nur ein Gerät mit einem Ausgabeschacht erforderlich ist. Die Verbindung zwischen dem jeweiligen Sammelbehälter bzw. Kartenmagazin erfolgt hierbei durch eine entsprechende Positionierung der Dreheinheit bzw. Wendeeinheit, wobei jeder Position ein bestimmtes Bauteil, nämlich Sammelbehälter oder Kartenmagazin zugeordnet ist. Die unterschiedlichen Positionierungen können hierbei nicht nur in einer vorgegebenen Ebene durch unterschiedliche Positionen der Dreheinheit um die senkrechte Achse, sondern alternativ oder zusätzlich auch durch unterschiedliche Neigungswinkel der Wendeeinheit zur waagerechten Achse erzeugt werden.

Bei einer bevorzugten Weiterbildung der Erfindung ist zwischen dem Magnetkartenleser und der Dreh-Wende-Vorrichtung ein Ausgabegerät für Wertkarten angeordnet, die aus demselben Ausgabeschacht des Magnetkartenlesers wie die Magnetkarte ausgegeben werden, während die jeweilige Magnetkarte in der Dreh-Wende-Vorrichtung festgehalten wird. Durch diese erfindungsgemäße Anordnung eines Ausgabegerätes zwischen Magnetkartenleser und Dreh-Wende-Vorrichtung läßt sich die erfindungsgemäße Vorrichtung derart erweitern, daß durch denselben Magnetkartenleser beliebige Wertkarten ausgegeben werden können.

So ist es beispielsweise möglich, daß der Besitzer einer einen bestimmten Geldwert repräsentierenden Magnetkarte mit der erfindungsgemäßen Vorrichtung einen Berechtigungsausweis, beispielsweise zum Waschen seines Kraftfahrzeuges, erhalten kann, dessen Gegenwert von der Magnetkarte abgebucht wird. Die Magnetkarte wird hierbei solange in der Dreh-Wende-Vorrichtung "geparkt", wie der Berechtigungsausweis hergestellt und durch den Magnetkartenleser ausgegeben wird. Erst anschließend wird die geparkte Magnetkarte, vermindert um den entsprechenden Gegenwert für die Wagenwäsche, zurückgegeben.

Hinsichtlich der konstruktiven Gestaltung der Dreh-Wende-Vorrichtung wird mit der Erfindung vorgeschlagen, deren Kartenschacht mit einer eigenen Kartentransportvorrichtung zu versehen. Diese Kartentransportvorrichtung besteht gemäß einem weiteren Merkmal der Erfindung aus einem über zwei Antriebsrollen geführten Transportriemen und zwei Andrückwalzen, die unter Federkraft an dem auf den Antriebsrollen befindlichen und in den Kartenschacht ragenden Transportriemen anliegen, wobei eine der Antriebsrollen von einem Schrittmotor angetrieben ist. Vorzugsweise ist der Transportriemen als O-Ring ausgebildet.

Gemäß einem weiteren Merkmal der Erfindung ist der Wendeantrieb durch einen Schrittmotor gebildet, der fest an der Wendeeinheit angeordnet und auf dessen Welle ein Zahnriemenritzel angeordnet ist, das über einen Zahnriemen mit einer fest an der Dreheinheit angeordneten Zahnriemenscheibe verbunden ist. Der Schrittmotor des Wendeantriebes bewirkt auf diese Weise eine um die waagerechte Achse verlaufende Drehbewegung der kompletten Wendeeinheit relativ zur Dreheinheit.

Auch der Drehantrieb wird erfindungsgemäß durch einen Schrittmotor gebildet, dessen Welle mit einem Dreharm der Dreheinheit fest verbunden ist. Die Verwendung eines Schrittmotors stellt hierbei sicher, daß auch die Dreheinheit sehr exakt um die senkrechte Achse verdreht werden kann, um die jeweilige Aufgabe der Dreh-Wende-Vorrichtung zuverlässig zu erfüllen.

Mit der Erfindung wird schließlich vorgeschlagen, das Anschlußkabel für den Schrittmotor des Dreh- bzw. Wendeantriebes mittels mehrerer Windungen auf eine Kabeltrommel aufzuwickeln, die auf der waagerechten bzw. senkrechten Achse der Wende- bzw. Dreheinheit angeordnet ist. Diese erfindungsgemäße Weiterbildung verhindert ein Knicken des Anschlußkabels, da dessen Biegung sich auf die gesamte Kabellänge verteilt, welche auf die Kabeltrommel aufgewickelt ist, so daß Überbelastungen zuverlässig vermieden werden.

Auf der Zeichnung ist ein Ausführungsbeispiel der erfindungsgemäßen Vorrichtung dargestellt, und zwar zeigen:
- Fig. 1: eine schematische Seitenansicht einer aus Magnetkartenleser, Drucker, Ausgabegerät und Dreh-Wende-Vorrichtung bestehenden Einrichtung,
- Fig. 2: eine schematische Draufsicht auf die Einrichtung nach Fig. 1,
- Fig. 3: eine der Fig. 1 entsprechende Seitenansicht der Dreh-Wende-Vorrichtung,
- Fig. 4: eine um 90° versetzte Stirnansicht der Dreh-Wende-Vorrichtung nach Fig. 3,
- Fig. 5: eine Ansicht der Dreh-Wende-Vorrichtung nach den Fig. 3 und 4 von der gegenüberliegenden Seite,
- Fig. 6: eine Draufsicht auf die Dreh-Wende-Vorrichtung nach den Fig. 3 bis 5 und
- Fig. 7: eine schematisierte Ansicht des Kabelverlaufes gemäß der Schnittlinie VIIa - VIIa bzw. VIIb - VIIb gemäß Fig. 4.

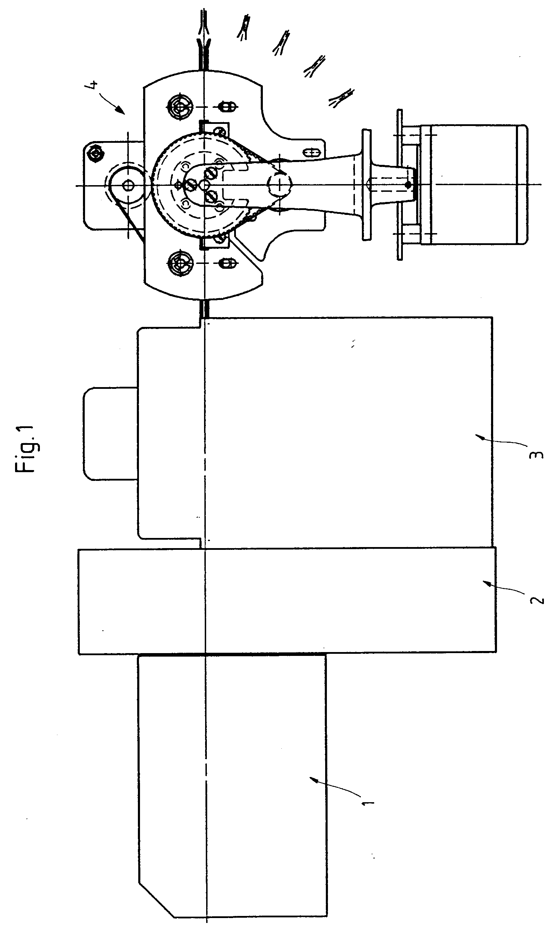

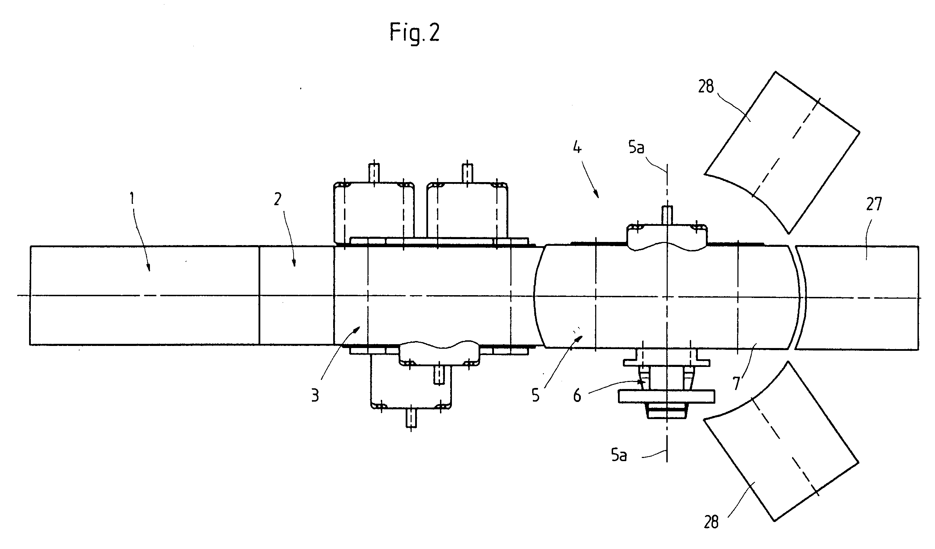

Die in den Fig. 1 und 2 anhand eines Ausführungsbeispiels dargestellte Vorrichtung zum Lesen und ggf. Beschreiben von Magnetkarten umfaßt einen Magnetkartenleser 1, dem beim Ausführungsbeispiel ein Drucker 2 nachgeschaltet ist. An diesen Drucker 2 schließt sich ein Ausgabegerät 3 an, aus dem beliebige Wertkarten ausgegeben werden können, die aus Endlosmaterial hergestellt werden. Beim Ausführungsbeispiel sind drei Ausgabeschächte für derartiges Endlosmaterial zu erkennen.

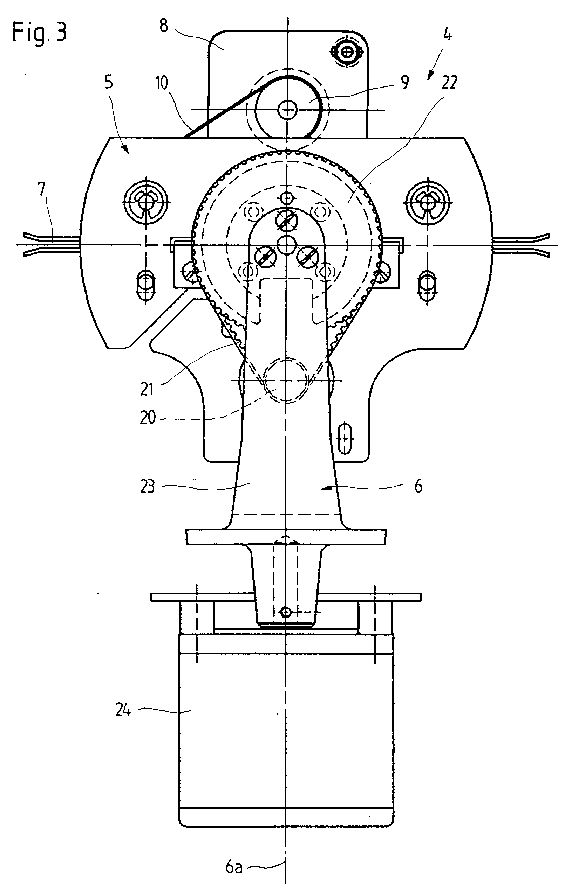

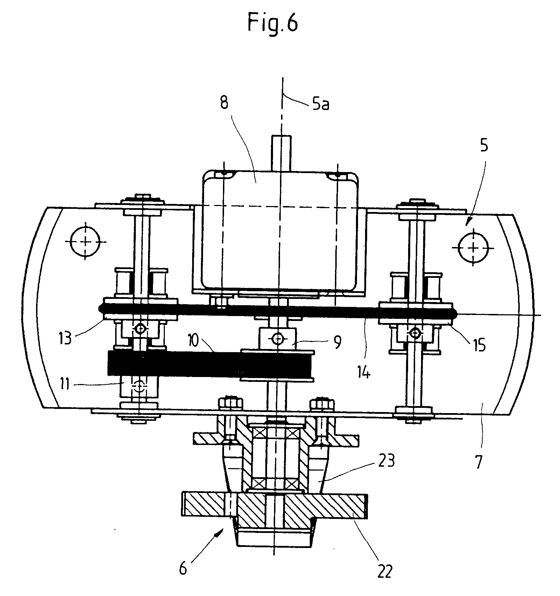

Das vierte Bauteil der Einrichtung bildet eine Dreh-Wende-Vorrichtung 4, die in vergrößerter Darstellung nochmals in den Fig. 3 bis 7 wiedergegeben ist.

Diese Dreh-Wende-Vorrichtung umfaßt eine Wendeeinheit 5, die um eine waagerechte Achse 5a um 180° verdrehbar ist, sowie eine Dreheinheit 6, die um eine senkrechte Achse 6a ebenfalls um 180° verdrehbar ist. Die Wendeeinheit 5 ist mit einem Kartenschacht 7 versehen, der in der Zeichnung durch zwei Schachtführungen zu erkennen ist und der in der Normalstellung, wie sie in den Zeichnungen dargestellt ist, waagerecht ausgerichtet ist.

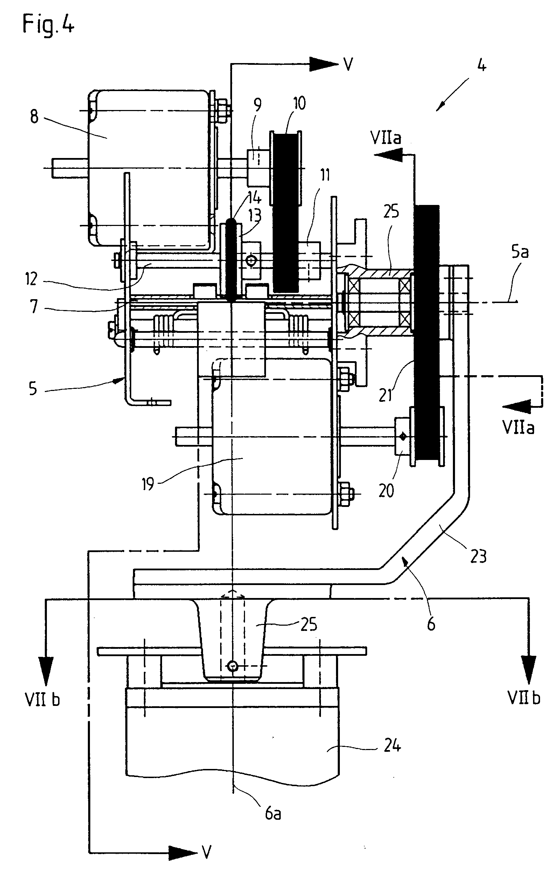

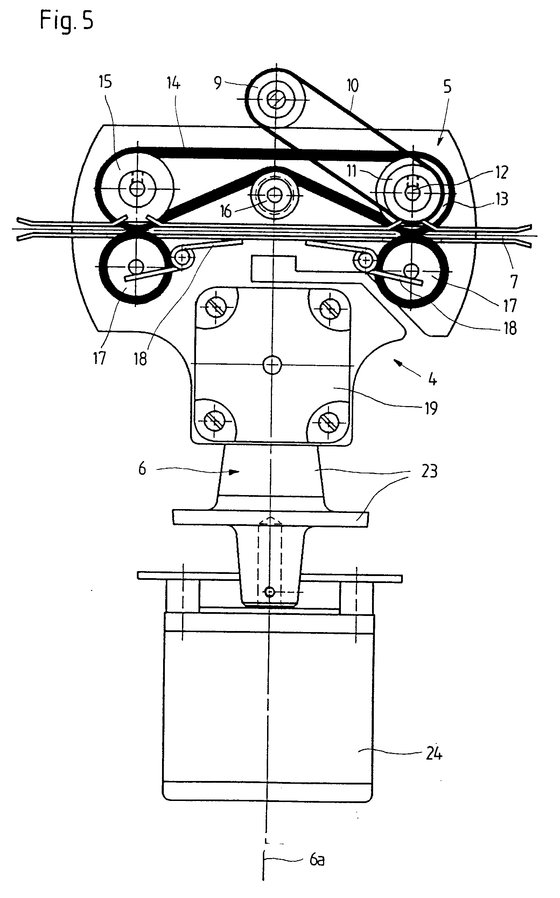

Wie am besten aus Fig. 5 hervorgeht, ist der Kartenschacht 7 der Dreh-Wende-Vorrichtung 4 mit einer eigenen Kartentransportvorrichtung versehen, die einen Schrittmotor 8 umfaßt. Auf der Welle dieses Schrittmotors 8 ist ein Zahnriemenritzel 9 (siehe Fig. 4) befestigt, das über einen Zahnriemen 10 eine Riemenscheibe 11 antreibt, die auf einer Welle 12 befestigt ist. Auf dieser Welle 12 befindet sich weiterhin eine Antriebsrolle 13, über die ein als O-Ring ausgebildeter Transportriemen 14 geführt ist. Dieser Transportriemen 14 verläuft über eine weitere Rolle 15 und wird durch eine Spannrolle 16 gespannt, wie am besten aus Fig. 5 hervorgeht.

Der um die Antriebsrolle 13 und die Rolle 15 laufende Transportriemen 14 ragt in den Kartenschacht 7 hinein und wirkt hier jeweils mit einer Andrückwalze 17 zusammen, die durch eine Feder 18 derart belastet ist, daß sie gegen den Transportriemen 14 gedrückt wird. Auf diese Weise ist es möglich, innerhalb des Kartenschachtes 7 der Wendeeinheit 5 eine Magnetkarte zu transportieren, wobei die Transportrichtung durch den Drehsinn des Schrittmotors 8 bestimmt wird.

Um die sich im Kartenschacht 7 befindende Magnetkarte um 180° um die waagerechte Achse 5a drehen zu können, so daß Oberseite und Unterseite vertauscht werden, ist ein Wendeantrieb vorgesehen, der ebenfalls einen Schrittmotor 19 umfaßt. Dieser Schrittmotor 19 ist fest an der Wendeeinheit 5 angeordnet. Er trägt auf seiner Welle ein Zahnriemenritzel 20 für einen Zahnriemen 21, der eine Zahnriemenscheibe 22 umschlingt. Diese Zahnriemenscheibe 22 ist ihrerseits an einem Dreharm 23 befestigt, welcher den wesentlichen Teil der Dreheinheit 6 bildet.

Durch Drehen des Zahnriemenritzels 20 wälzt sich dieses innerhalb des von der Zahnriemenscheibe 22 unverdrehbar festgehaltenen Zahnriemens 21 ab und führt hierbei zusammen mit der kompletten Wendeeinheit 5 eine Drehbewegung um die waagerechte Achse 5a aus. Auf diese Weise ist es möglich, die komplette Wendeeinheit 5 um 180° zu verdrehen, so daß eine im Kartenschacht 7 befindliche Magnetkarte derart gewendet werden kann, daß ihre ursprüngliche Unterseite nunmehr zur Oberseite wird.

Um alternativ oder zusätzlich den Anfang und das Ende dieser im Kartenschacht 7 befindlichen Magnetkarte vertauschen zu können, kann die Wendeeinheit 5 mittels der Dreheinheit 6 um die senkrechte Achse 6a ebenfalls um 180° gedreht werden. Als Drehantrieb ist wiederum ein Schrittmotor 24 vorgesehen, dessen Welle mit dem Dreharm 23 starr verbunden ist. Eine Betätigung dieses Schrittmotors 24 bewirkt somit ein Verdrehen der die Wendeeinheit 5 tragenden Dreheinheit 6 um die senkrechte Achse 6a.

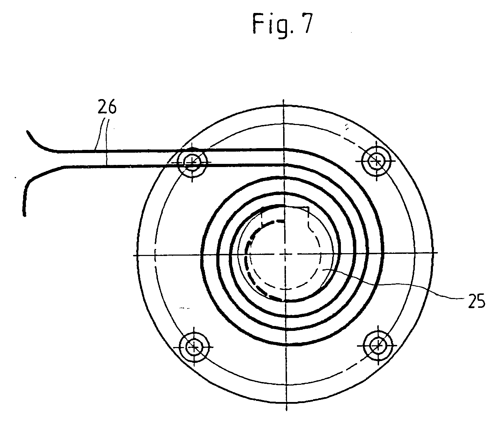

Sowohl an der waagerechten Achse 5a als auch an der senkrechten Achse 6a ist eine Kabeltrommel 25 angeordnet, wie die Fig. 7 entsprechend den Schnittangaben VIIa,VIIa bzw. VIIb,VIIb in Fig. 4 ergibt. Auf diese Kabeltrommel 25 ist das jeweilige Anschlußkabel 26 für den Schrittmotor 19 bzw. 24 aufgewickelt, wobei die Wicklung vorzugsweise 1 1/2 Windungen umfaßt. Die Zeichnung gemäß Fig. 7 zeigt die Ausgangsstellung, aus der die Kabeltrommel 25 entgegen dem Uhrzeigersinn um 180° verdreht werden kann, um in die andere Endstellung zu gelangen. Hierbei verteilt sich die Biegung des Anschlußkabels 26 auf die gesamte Kabellänge, so daß Knickungen und andere Beschädigungen des Anschlußkabels 26 ausgeschlossen werden.

Wenn die voranstehend beschriebene Dreh-Wende-Vorrichtung 4 dem in den Fig. 1 und 2 lediglich schematisch dargestellten Magnetkartenleser 1 nachgeschaltet wird, besteht somit die Möglichkeit, auch falsch in den Magnetkartenleser 1 eingegebene Magnetkarten zu verarbeiten, ohne daß diese dem Benutzer zuvor zurückgegeben werden müssen. Die Magnetkarten werden mit der Dreh-Wende-Vorrichtung 4 um 180° gedreht und/oder gewendet und in der richtigen Lage dem Magnetkartenleser 1 zurückgegeben.

Hierbei ist es nicht erforderlich, daß die Dreh-Wende-Vorrichtung 4 unmittelbar hinter dem Magnetkartenleser 1 angeordnet ist, wie dies das Ausführungsbeispiel nach den Fig. 1 und 2 zeigt.

So ist es beispielsweise möglich, zwischen Magnetkartenleser 1 und Dreh-Wende-Vorrichtung 4 ein Ausgabegerät 3 anzuordnen, das in der Lage ist, aus Endlosmaterial herzustellende Wertkarten auszugeben, die dem Benutzer über denselben Kartenschacht des Magnetkartenlesers 1 ausgegeben werden, der zur Entgegennahme der Magnetkarten dient. Da bei einer derartigen Ausgabe von Wertkarten die Magnetkarte solange im Gerät festgehalten werden muß, bis die Ausgabe der Wertkarte erfolgt ist, dient in diesem Fall die Dreh-Wende-Vorrichtung 4 zusätzlich der Verwahrung der Magnetkarte während der Herstellung und Ausgabe der jeweiligen Wertkarte mit Hilfe des Ausgabegerätes 3.

In Fig. 2 ist schließlich eine weitere Funktion der Dreh-Wende-Vorrichtung 4 angedeutet. Die Fig. 2 zeigt die Zuordnung eines Sammelbehälters 27 und zweier Kartenmagazine 28 zur Dreh-Wende-Vorrichtung 4. Der Sammelbehälter 27 dient hierbei dem Einzug verbrauchter Magnetkarten; aus den Kartenmagazinen 28 können vorbereitete Magnetkarten oder andere Wertkarten ausgegeben werden, wozu es lediglich erforderlich ist, den Kartenschacht 7 der Wendeeinheit 5 in die jeweilige Position zu bringen, die mit der Lage des Sammelbehälters 27 bzw. des jeweiligen Kartenmagazins 28 korrespondiert. Hierbei können Sammelbehälter 27 und Kartenmagazine 28 nicht nur in derselben waagerechten Ebene liegen, so daß deren Ansteuerung durch Verdrehen der waagerecht gehaltenen Wendeeinheit 5 mittels der Dreheinheit 6 erfolgt; es ist auch möglich, die Übergabepositionen unter einem von der Waagerechten abweichenden Winkel der Wendeeinheit 5 auszurichten, so daß eine entsprechende Ansteuerung sowohl der Dreheinheit 6 als auch der Wendeeinheit 5 erforderlich ist. Diese Ansteuerung läßt sich jedoch über die verwendeten Schrittmotoren 24 und 19 ohne Schwierigkeiten erreichen.

### Bezugszeichenliste:

- 1: Magnetkartenleser
- 2: Drucker
- 3: Ausgabegerät
- 4: Dreh-Wende-Vorrichtung
- 5: Wendeeinheit
- 5a: waagerechte Achse
- 6: Dreheinheit
- 6a: senkrechte Achse
- 7: Kartenschacht
- 8: Schrittmotor
- 9: Zahnriemenritzel
- 10: Zahnriemen
- 11: Riemenscheibe
- 12: Welle
- 13: Antriebsrolle
- 14: Transportriemen
- 15: Rolle
- 16: Spannrolle
- 17: Andrückwalze
- 18: Feder
- 19: Schrittmotor
- 20: Zahnriemenritzel
- 21: Zahnriemen
- 22: Zahnriemenscheibe
- 23: Dreharm
- 24: Schrittmotor
- 25: Kabeltrommel
- 26: Anschlußkabel
- 27: Sammelbehälter
- 28: Kartenmagazin

## Patentansprüche

1. Vorrichtung zum Lesen und ggf. Beschreiben von Magnetkarten mit einem Magnetkartenleser (1) und ggf. -schreiber, dem die Magnetkarten an der Frontseite zugeführt und entnommen werden,
**dadurch gekennzeichnet,**
daß an die Rückseite des Magnetkartenlesers (1) eine Dreh-Wende-Vorrichtung (4) angeschlossen ist, die einen Kartenschacht (7) umfaßt, der in einer Wendeeinheit (5) angeordnet ist, die um eine waagerechte Achse (5a) mittels eines Wendeantriebes um 180° verdrehbar ist und ihrerseits an einer Dreheinheit (6) gelagert ist, die um eine senkrechte Achse (6a) mittels eines Drehantriebes um 180° verdrehbar ist.

2. Vorrichtung nach Anspruch 1, dadurch gekennzeichnet, daß der Dreh-Wende-Vorrichtung (4) mindestens ein Sammelbehälter (27) für einzuziehende Karten und/oder ein Kartenmagazin (28) für auszugebende Karten zugeordnet ist.

3. Vorrichtung nach Anspruch 1 oder 2, dadurch gekennzeichnet, daß zwischen dem Magnetkartenleser (1) und der Dreh-Wende-Vorrichtung (4) ein Ausgabegerät (3) für Wertkarten angeordnet ist, die aus demselben Ausgabeschacht des Magnetkartenlesers (1) wie die Magnetkarte ausgegeben werden, während die jeweilige Magnetkarte in der Dreh-Wende-Vorrichtung (4) festgehalten wird.

4. Vorrichtung nach mindestens einem der Ansprüche 1 bis 3, dadurch gekennzeichnet, daß der Kartenschacht (7) der Dreh-Wende-Vorrichtung (4) mit einer eigenen Kartentransportvorrichtung versehen ist.

5. Vorrichtung nach Anspruch 4, dadurch gekennzeichnet, daß die Kartentransportvorrichtung aus einem über zwei Rollen (13,15) geführten Transportriemen (14) und zwei Andrückwalzen (17) besteht, die unter Federkraft an dem auf den Rollen (13,14) befindlichen und in den Kartenschacht (7) ragenden Transportriemen (14) anliegen, wobei eine der Rollen (13) von einem Schrittmotor (8) angetrieben ist.

6. Vorrichtung nach Anspruch 5, dadurch gekennzeichnet, daß der Transportriemen (14) als O-Ring ausgebildet ist.

7. Vorrichtung nach mindestens einem der Ansprüche 1 bis 3, dadurch gekennzeichnet, daß der Wendeantrieb durch einen Schrittmotor (19) gebildet ist, der fest an der Wendeeinheit (5) angeordnet und auf dessen Welle ein Zahnriemenritzel (20) befestigt ist, das über einen Zahnriemen (21) mit einer fest an der Dreheinheit (6) angeordneten Zahnriemenscheibe (22) verbunden ist.

8. Vorrichtung nach mindestens einem der Ansprüche 1 bis 3, dadurch gekennzeichnet, daß der Drehantrieb durch einen Schrittmotor (24) gebildet ist, dessen Welle mit einem Dreharm (23) der Dreheinrichtung (6) fest verbunden ist.

9. Vorrichtung nach Anspruch 7 oder 8, dadurch gekennzeichnet, daß das Anschlußkabel (26) für den Schrittmotor (24) bzw. (19) des Dreh- bzw. Wendeantriebes mittels mehrerer Windungen auf eine Kabeltrommel (25) aufgewickelt ist, die auf der waagerechten Achse (5a) bzw. senkrechten Achse (6a) der Dreh- bzw. Wendeeinrichtung (6,5) angeordnet ist.

## Geänderte Patentansprüche

### Geänderte Patentansprüche gemäss Regel 86(2) EPÜ.

1. Vorrichtung zum Lesen und ggf. Beschreiben von Magnetkarten mit einem Magnetkartenleser (1) und ggf. - Schreiber, dem die Magnetkarten an der Frontseite zugeführt und entnommen werden, wobei dem Magnetkartenleser (1) eine Dreh-Wende-Vorrichtung (4) zugeordnet ist, die einen Kartenschacht (7) umfaßt, der in einer Wendeeinheit (5) angeordnet ist, die um eine waagerechte Achse (5a) mittels eines Wendeantriebes um 180° verdrehbar ist,
**dadurch gekennzeichnet,** daß die Wendeeinheit (5) ihrerseits an einer Dreheinheit (6) gelagert ist, die um eine senkrechte Achse (6a) mittels eines Drehantriebes um 180° verdrehbar ist.

2. Vorrichtung nach Anspruch 1, dadurch gekennzeichnet, daß der Dreh-Wende-Vorrichtung (4) mindestens ein Sammelbehälter (27) für einzuziehende Karten und/oder ein Kartenmagazin (28) für auszugebende Karten zugeordnet ist.

3. Vorrichtung nach Anspruch 1 oder 2, dadurch gekennzeichnet, daß zwischen dem Magnetkartenleser (1) und der Dreh-Wende-Vorrichtung (4) ein Ausgabegerät (3) für Wertkarten angeordnet ist, die aus demselben Ausgabeschacht des Magnetkartenlesers (1) wie die Magnetkarte ausgegeben werden, während die jeweilige Magnetkarte in der Dreh-Wende-Vorrichtung (4) festgehalten wird.

4. Vorrichtung nach mindestens einem der Ansprüche 1 bis 3, dadurch gekennzeichnet, daß der Wendeantrieb durch einen Schrittmotor (19) gebildet ist, der fest an der Wendeeinheit (5) angeordnet und auf dessen Welle ein Zahnriemenritzel (20) befestigt ist, das über einen Zahnriemen (21) mit einer fest an der Dreheinheit (6) angeordneten Zahnriemenscheibe (22) verbunden ist.

5. Vorrichtung nach mindestens einem der Ansprüche 1 bis 4, dadurch gekennzeichnet, daß der Drehantrieb durch einen Schrittmotor (24) gebildet ist, dessen Welle mit einem Dreharm (23) der Dreheinrichtung (6) fest verbunden ist.

6. Vorrichtung nach Anspruch 4 oder 5, dadurch gekennzeichnet, daß das Anschlußkabel (26) für den Schrittmotor (24) bzw. (19) des Dreh- bzw. Wendeantriebes mittels mehrerer Windungen auf eine Kabeltrommel (25) aufgewickelt ist, die auf der waagerechten Achse (5a) bzw. senkrechten Achse (6a) der Drehbzw. Wendeeinrichtung (6,5) angeordnet ist.

7. Vorrichtung nach mindestens einem der Ansprüche 1 bis 6, dadurch gekennzeichnet, daß der Kartenschacht (7) der Dreh-Wende-Vorrichtung (4) mit einer eigenen Kartentransportvorrichtung versehen ist.

8. Vorrichtung nach Anspruch 7, dadurch gekennzeichnet, daß die Kartentransportvorrichtung aus einem über zwei Rollen (13,15) geführten Transportriemen (14) und zwei Andrückwalzen (17) besteht, die unter Federkraft an dem auf den Rollen (13,14) befindlichen und in den Kartenschacht (7) ragenden Transportriemen (14) anliegen, wobei eine der Rollen (13) von einem Schrittmotor (8) angetrieben ist.

9. Vorrichtung nach Anspruch 8, dadurch gekennzeichnet, daß der Transportriemen (14) als 0-Ring ausgebildet ist.
